# FASCICULE DE BREVET EUROPEEN

(11) **EP 2 791 528 B1**
(45) Date de publication et mention de la délivrance du brevet: **23.11.2016**
(21) Numéro de dépôt: 12816698.0
(22) Date de dépôt: 10.12.2012
(51) Int. Cl.: F16D 13/75

(54) **DOUBLE EMBRAYAGE A RATTRAPAGE D'USURE, NOTAMMENT POUR VEHICULE AUTOMOBILE**
DOPPELKUPPLUNG MIT EINER VERSCHLEISSNACHSTELLEINRICHTUNG UNTER ANDEREN FÜR EIN AUTOMOBIL FAHRZEUG
TWIN CLUTCH WITH WEAR COMPENSATION DEVICE IN PARTICULARY FOR AN AUTOMOTIVE VEHICULE

(30) Priorité: 16.12.2011 FR 1161780
(43) Date de publication de la demande: 22.10.2014
(73) Titulaire: Valeo Embrayages, 80009 Amiens Cedex 2 (FR)
(72) Inventeur: MAUREL, Hervé, F-80000 Amiens (FR); DHALLEINE, Christophe, F-80800 Villers-Bretonneux (FR); BOULET, Jérôme, F-60510 Oroer (FR)
(86) Numéro de dépôt international: PCT/FR2012/052857
(87) Numéro de publication internationale: WO 2013/088043

(56) Documents cités:
- WO-A1-03/029675
- DE-A1-102009 005 738
- FR-A1- 2 847 626

## Description

La présente invention concerne un double embrayage à rattrapage d'usure, notamment pour véhicule automobile.

Un double embrayage permet de coupler alternativement l'arbre du moteur du véhicule avec deux arbres coaxiaux d'entrée d'une boîte de vitesses, qui peut être du type robotisé.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme destiné à coopérer avec un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert et d'embrayage normalement fermé.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est solidaire en rotation d'un volant lié à l'arbre moteur. Ainsi, le serrage d'un disque de friction entre les plateaux de pression et de réaction correspondants permet la transmission d'un couple entre l'arbre moteur et l'arbre de la boîte de vitesses associé.

L'utilisation des embrayages provoque une usure des garnitures de friction des disques de friction ainsi que des contre-matériaux des plateaux de pression et de réaction associés. Ceci se traduit par une variation de la position de chaque plateau de pression par rapport au plateau de réaction, générant une variation de l'effort de serrage du disque de friction et une modification de la position du point de léchage et de la butée d'embrayage. On rappelle que le point de léchage est la position à partir de laquelle une partie du couple du moteur est transmis à l'arbre de la boîte de vitesses lors de la fermeture de l'embrayage.

Le document FR 2 847 626, au nom de la Demanderesse, propose un embrayage équipé de moyens de rattrapage d'usure interposés entre un plateau de pression et un diaphragme monté sur un couvercle fixé à un plateau de réaction. Ces moyens de rattrapage d'usure comportent un anneau à rampes circonférentielles qui coopèrent avec des contre-rampes complémentaires du plateau de pression. L'anneau à rampes sert également à l'appui du diaphragme de sorte que la rotation de l'anneau par rapport au plateau de pression entraîne le déplacement des rampes par rapport aux contre-rampes et, ainsi, le déplacement axial du plateau de pression par rapport au diaphragme, au couvercle et au plateau de réaction. On fait ainsi varier la distance entre le plateau de pression et le plateau de réaction associé, d'une façon qui compense l'usure.

Un organe denté est en outre fixé sur l'anneau à rampes et engrène avec une vis sans fin montée dans une cassette fixée au couvercle, l'organe denté étant au droit de la vis sans fin.

La vis sans fin est couplée en rotation avec une roue à rochet coopérant avec un cliquet fixé sur le couvercle. La vis sans fin et/ou la roue à rochet sont plaquées axialement par un organe élastique contre une aile de la cassette.

Le cliquet se présente sous la forme d'une lamelle élastique présentant une languette de commande coopérant avec les dents de la roue à rochet de façon à autoriser la rotation de la roue à rochet dans un sens de rotation, en cas d'usure, et à empêcher la rotation de la roue à rochet dans le sens de rotation contraire, le premier diaphragme venant en appui contre une languette de rappel du cliquet, de manière à déplacer la languette de commande lors de son actionnement.

De cette manière, en cas d'usure et lors des actionnements successifs du diaphragme, le cliquet entraîne la rotation de la roue à rochet et de la vis sans fin, cette dernière entraînant la rotation de l'anneau portant les rampes, par l'intermédiaire de l'organe denté. On augmente ainsi progressivement la distance entre le plateau de pression et le couvercle et on diminue progressivement la distance entre le plateau de pression et le plateau de réaction associé, de façon à compenser l'usure.

La demande de brevet FR 2 860 845 décrit l'utilisation de tels moyens de rattrapage d'usure dans un double embrayage. Des premiers et des seconds moyens de rattrapage d'usure sont associés à un premier et un second mécanisme d'embrayage. Les moyens de rattrapage d'usure sont à chaque fois disposés à proximité du plateau de pression associé. Leur positionnement axial entre les différentes parties des embrayages, à l'intérieur du couvercle, se traduit toutefois par un encombrement axial et radial important.

Le document US 7 080 722 décrit un embrayage double équipé de moyens de rattrapage d'usure situés à proximité de chacun des plateaux de pression, les moyens de rattrapage d'usure utilisant toutefois un autre type de technologie. Le document WO 03/029675 décrit encore une autre variante d'un embrayage double équipé de moyens de rattrapage d'usure. Ces solutions présentent également les inconvénients exposés précédemment.

L'invention a notamment pour but d'apporter une solution simple, efficace et économique à ce problème.

A cet effet, elle propose un double embrayage à rattrapage d'usure, notamment pour véhicule automobile, comportant au moins un plateau de réaction destiné à être couplé en rotation à un arbre menant, un premier et un second disques de friction portant des garnitures de friction, destinés à être couplés respectivement à un premier et un second arbres menés, un premier et un second plateaux de pression, actionnés respectivement par un premier et un second diaphragmes de façon à serrer ou libérer chacun un disque de friction entre le plateau de pression et le plateau de réaction correspondants, le premier plateau de pression étant relié fixement à un couvercle mobile en translation par rapport au plateau de réaction et étant actionné par appui du premier diaphragme sur le couvercle mobile, et des moyens de rattrapage de l'usure du premier disque de friction, du premier plateau de pression et/ou du plateau de réaction associé, caractérisé en ce que les moyens de rattrapage d'usure comportent des moyens à rampes, disposés du côté du premier diaphragme, coopérant avec des moyens à contre-rampes, disposés du côté du couvercle mobile, les moyens à rampes et les moyens à contre-rampes étant disposés entre le premier diaphragme et le couvercle mobile de façon à ce que la rotation des moyens à rampes par rapport aux moyens à contre-rampes modifie la distance entre le premier diaphragme et le couvercle mobile, les moyens à rampes portant une denture engrenant avec une vis sans fin, les moyens de rattrapage d'usure comportant en outre des moyens d'entrainement en rotation de la vis sans fin, aptes à être rendus opérationnels par l'usure lorsque le premier diaphragme est actionné, la vis sans fin étant portée par une partie solidaire du plateau de réaction coopérant avec le premier plateau de pression pour le serrage du premier disque de friction.

Les moyens de rattrapage d'usure qui ont un fonctionnement similaire à ceux du document FR 2 847 626, ne sont plus disposés entre un diaphragme et le plateau de pression associé, mais entre le premier diaphragme et un couvercle mobile relié au premier plateau de pression. Ils peuvent ainsi être situés à distance du premier plateau de pression, dans une zone moins sujette à des contraintes d'encombrement.

En fonctionnement et en cas d'usure, le couvercle mobile s'écarte par rapport au premier diaphragme de façon à compenser cette usure. La position axiale du premier diaphragme n'est pas modifiée par l'usure. En conséquence, la position axiale des moyens à rampes portant la denture, en appui contre le premier diaphragme, n'est pas non plus modifiée. Il en résulte que la position de la denture par rapport à la vis sans fin est indépendante de l'usure, ce qui permet de garantir le bon fonctionnement des moyens de rattrapage d'usure.

Selon l'invention, seul le premier mécanisme d'embrayage est équipé de moyens de rattrapage d'usure. En effet, ce premier mécanisme d'embrayage est en général destiné à entraîner l'arbre associé aux rapports de vitesses impairs, en particulier au premier rapport de vitesses. Le premier disque de friction, le premier plateau de pression et le plateau de réaction associé subissent ainsi une usure plus importante que les autres. Le fait de se dispenser de moyens de rattrapage d'usure dans le second mécanisme d'embrayage permet encore de limiter l'encombrement axial et radial de l'ensemble.

Selon une caractéristique de l'invention, le double embrayage comporte un plateau de réaction unique, disposé axialement entre les premier et second disques de friction.

De préférence, les moyens d'entraînement de la vis sans fin comportent une roue à rochet solidaire en rotation de la vis sans fin, coopérant avec un cliquet apte à être déplacé lors de l'actionnement du premier diaphragme.

De plus, le second plateau de pression, le second disque de friction et le second diaphragme peuvent être logés dans un couvercle fixé au plateau de réaction correspondant, la vis sans fin étant montée mobile en rotation dans une cassette fixée sur le couvercle, à l'extérieur de celui-ci.

La vis sans fin et/ou la roue à rochet peuvent être montées mobiles en rotation à l'intérieur de la cassette, la vis sans fin et/ou la roue à rochet étant plaquées par un organe élastique contre une face écrouie de la cassette.

La face écrouie, plus dure, résiste mieux à l'usure due aux frottements de la vis sans fin et/ou de la roue à rochet, ce qui permet d'avoir un couple de frottement constant au cours du temps et d'éviter les phénomènes de « fretting » et/ou de microsoudage.

Selon une autre caractéristique de l'invention, le premier diaphragme comporte un doigt périphérique externe d'actionnement du cliquet, le couvercle portant une rondelle d'appui du second diaphragme comportant une ouverture autorisant le passage dudit doigt d'actionnement, lors de l'actionnement du premier diaphragme.

Une telle conception permet d'augmenter encore la compacité de l'ensemble en évitant toute interaction entre le second diaphragme et la rondelle d'appui.

Avantageusement, un organe denté engrenant avec la vis sans fin est fixé sur les moyens à rampe, la flexion ou le déplacement axial de l'organe denté étant limité par deux butées opposées.

On s'assure ainsi du bon positionnement de l'organe denté vis-à-vis de la vis sans fin et, par conséquent, de la fiabilité des moyens de rattrapage d'usure.

En particulier, la flexion ou le déplacement axial de l'organe denté peut être limité par un rebord de la cassette, d'une part, et par les moyens de fixation de la cassette sur le couvercle, d'autre part.

Selon encore une autre caractéristique de l'invention, le premier diaphragme est monté basculant sur le couvercle par l'intermédiaire de rivets, le basculement du premier diaphragme étant limité, dans un sens, par les têtes desdits rivets et, dans l'autre sens, par une face sensiblement radiale du couvercle mobile.

Les têtes des rivets servant de butée pour le premier diaphragme peuvent présenter une forme générale en T dont les branches latérales sont destinées à venir en appui contre des doigts radialement internes du premier diaphragme.

Une telle forme permet notamment de limiter l'encombrement radial des têtes des rivets.

En outre, les moyens à rampes peuvent comporter un anneau monté en rotation et en translation autour d'une partie cylindrique du couvercle mobile, l'anneau comportant des rampes circonférentielles qui coopérent avec des contre-rampes complémentaires formées sur le couvercle mobile.

Préférentiellement, le cliquet se présente sous la forme d'une lamelle élastique présentant une languette de commande coopérant avec les dents de la roue à rochet de façon à autoriser la rotation de la roue à rochet dans un sens de rotation en cas d'usure, et à empêcher la rotation de la roue à rochet dans le sens de rotation contraire, le premier diaphragme venant en appui contre une languette de rappel du cliquet, de manière à déplacer la languette de commande lors de l'actionnement du premier diaphragme.

De plus, le cliquet peut comporter au moins une patte latérale formant une butée destinée à venir en appui contre le couvercle, lors de l'actionnement du premier diaphragme.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe axiale d'un double embrayage selon l'invention,
- la figure 2 est une vue en perspective d'une partie du double embrayage,
- les figures 3 à 5 sont des vues de détail et en perspective, illustrant les moyens de rattrapage d'usure du double embrayage selon -l'invention,
- la figure 6 est une vue en perspective et en coupe axiale d'une partie du double embrayage,
- les figures 7 et 8 sont des vues de détail, en perspective et de côté, de deux variantes illustrant notamment le maintien en position de l'organe denté,
- la figure 9 est une vue écorchée et en perspective d'une partie du double embrayage,
- la figure 10 est une vue de détail, en perspective, illustrant l'ouverture ménagée dans la rondelle d'appui du second embrayage,
- les figures 11 et 12 sont des vues de détail, en perspective, illustrant le positionnement des rivets de centrage du premier diaphragme sur le couvercle,
- la figure 13 est une vue en perspective d'une partie du double embrayage selon l'invention.

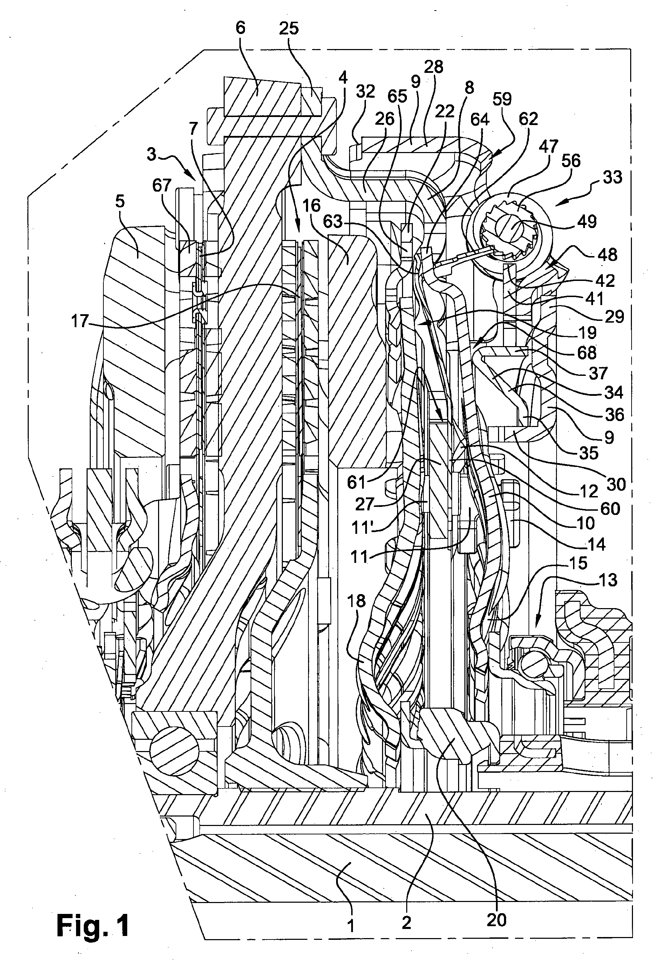

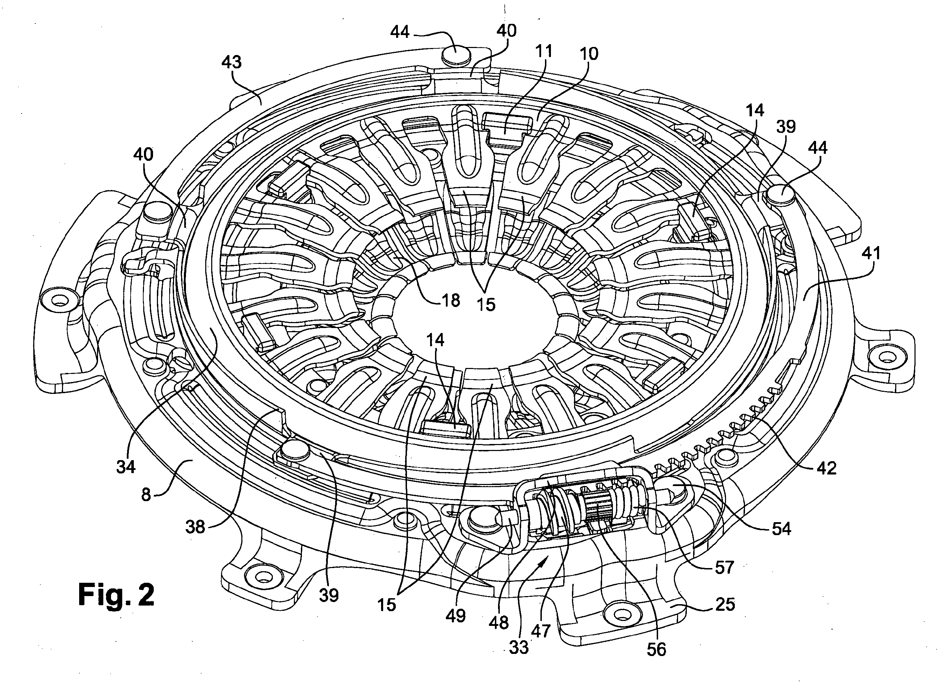

Les figures 1 et 2 illustrent un double embrayage selon l'invention, destiné à coupler un moteur avec un premier et un second arbres d'entrée 1, 2 d'une boîte de vitesses. Le double embrayage comporte des premier et second embrayages 3, 4 de passage de rapports de parités différentes.

Le premier embrayage comporte un premier plateau de pression 5 et un plateau de réaction 6 entre lesquels s'étend un premier disque de friction 7. Le premier plateau de pression 5 est couplé en rotation au plateau de réaction 6 et est mobile en translation par rapport à celui-ci, entre une position embrayée et une position débrayée, dans lesquelles il serre le premier disque de friction 7 sur le plateau de réaction 6, ou respectivement libère le premier disque de friction 7.

Le plateau de réaction 6 est fixé sur un couvercle 8 couplé à l'arbre du moteur. Le premier disque de friction 7 est couplé au premier arbre d'entrée 1 de la boîte de vitesses. Ainsi, en position embrayée du premier embrayage 3, l'arbre du moteur est couplé au premier arbre d'entrée 1 de la boîte de vitesses.

Le premier plateau de pression 5 est fixé sur un couvercle 9 mobile en translation par rapport au plateau de réaction 6 et au couvercle 8, et s'étendant vers l'avant.

Un premier diaphragme 10 est monté basculant sur le couvercle 8, par l'intermédiaire de rivets 11 assurant le centrage dudit diaphragme 10 tout en autorisant son basculement. Le premier diaphragme 10 se présente sous la forme d'une tôle annulaire élastique prenant appui sur le couvercle 8 au niveau d'une zone d'appui 12, le premier diaphragme basculant autour de cette zone d'appui 12. La zone d'appui 12 est formée par une partie en saillie du couvercle 8.

La commande du premier embrayage 10 se fait classiquement au moyen d'une première butée d'embrayage 13 coopérant avec la périphérie radialement interne du premier diaphragme 10. Le premier diaphragme 10 forme un levier transmettant la force appliquée par la première butée de commande 13 au premier plateau de pression 5, par l'intermédiaire du couvercle mobile 9.

Afin de permettre le serrage efficace du premier disque de friction 7, le premier diaphragme 10 est pré-chargé au repos. Sans cette pré-charge, le diaphragme 10 serait, au repos, dans un état d'élasticité requérant un début de course de la butée de commande 13 relativement important pour appliquer un effort de serrage efficace sur le disque de friction correspondant 7. Lorsque la première butée d'embrayage 13 est actionnée, elle équilibre la pré-charge du premier diaphragme 10 avant de commencer le serrage du premier disque de friction 7. La pré-charge du premier diaphragme 10 permet de réduire la course d'approche de la butée d'embrayage afin de serrer le disque de friction, et d'avoir toujours un effort de précharge minimum, par exemple sur le roulement à billes de la butée d'embrayage et sur le roulement à billes qui supporte l'embrayage. On augmente ainsi la durée de vie desdits roulements et on limite les vibrations de l'embrayage.

Le premier embrayage est du type normalement ouvert. La position de repos du diaphragme correspond donc à un état débrayé du dispositif d'embrayage. Le diaphragme présente de préférence une portion du type rondelle de Belleville permettant de rappeler le diaphragme vers sa position de repos.

En position de repos du premier diaphragme 10, c'est-à-dire lorsque la première butée 13 n'exerce pas ou peu d'effort sur le premier diaphragme 10, le premier diaphragme 10 n'exerce donc pas (ou peu) d'effort sur le premier plateau de pression 5. Le premier plateau de pression 5 est écarté du plateau de réaction 6 par l'intermédiaire de moyens de rappels appropriés, tels que des languettes élastiques, de manière à libérer le premier disque de friction 7.

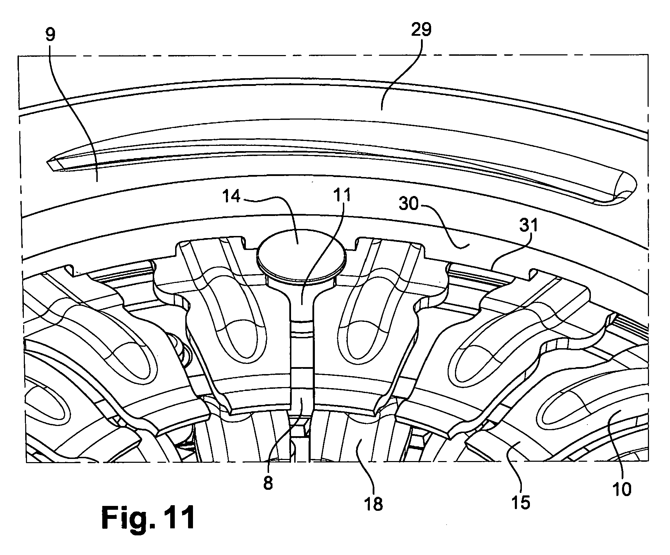

Dans une première forme de réalisation représentée aux figures 1 et 11, les rivets 11 sont cylindriques et comportent une tête 14 de plus grand diamètre destinée à venir en butée contre des doigts radiaux 15 du premier diaphragme 10, s'étendant à la périphérie radialement interne de ce dernier.

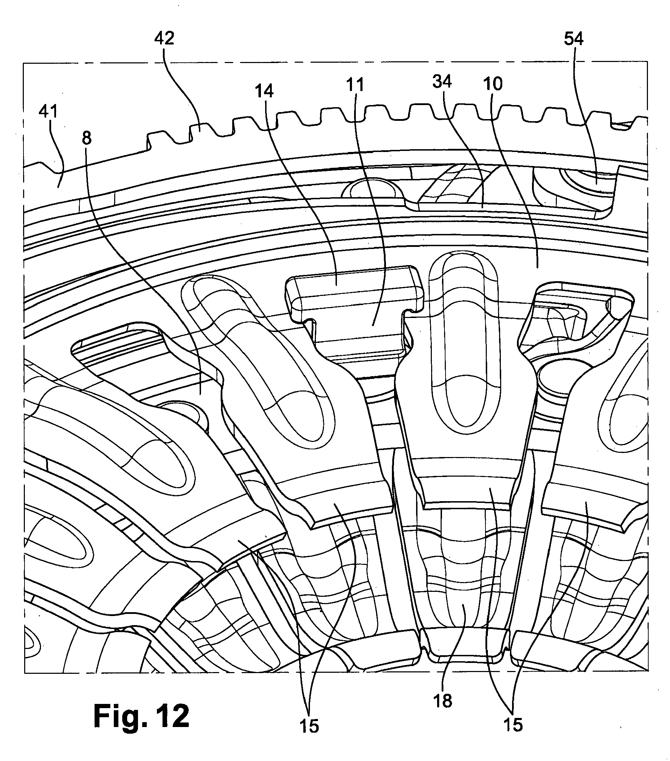

Dans une seconde forme de réalisation représentée à la figure 12, les rivets 11 peuvent présenter une tête 14 en forme générale de T, présentant deux parties radiales s'étendant en regard des doigts 15 du premier diaphragme 10 de façon à servir de butée. Cette forme de réalisation permet de limiter l'encombrement radial des rivets 11.

Le second embrayage comporte un second plateau de pression 16, et un second disque de friction 17 s'étendant radialement entre le plateau de réaction 6 et le second plateau de pression 16. Le même plateau de réaction 6 est ainsi utilisé pour les deux embrayages 3, 4, chaque disque de friction 7, 17 étant disposé du côté de l'une des deux faces radiales d'appui du plateau de réaction 6. Le second plateau de pression 17 est couplé en rotation au plateau de réaction 6 et est mobile en translation par rapport à celui-ci, entre une position embrayée et une position débrayée, dans lesquelles il serre le second disque de friction 17 sur le plateau de réaction 6, ou respectivement libère le second disque de friction 17.

Le second disque de friction 17 est couplé au second arbre d'entrée 2 de la boîte de vitesses. Ainsi, en position embrayée du second embrayage 4, l'arbre du moteur est couplé au second arbre d'entrée 2 de la boîte de vitesses.

Un second diaphragme 18 est monté basculant sur le couvercle 8, par l'intermédiaire de rivets 11' (figure 1) assurant le centrage dudit diaphragme 18 tout en autorisant son basculement. Le second diaphragme 18 se présente, comme précédemment, sous la forme d'une tôle annulaire élastique prenant appui sur le couvercle 8 au niveau d'une zone d'appui 19, le second diaphragme 18 basculant ainsi autour de cette zone d'appui 19.

La commande du second embrayage 4 se fait classiquement au moyen d'une seconde butée d'embrayage 20 coopérant avec la périphérie radialement interne du second diaphragme 18, par l'intermédiaire d'un organe de transmission d'effort, non représenté. Le second diaphragme 18 forme un levier transmettant la force appliquée par la seconde butée d'embrayage 20 au second plateau de pression 16, afin de permettre le serrage efficace du second disque de friction 17. En particulier, la zone d'appui du second diaphragme 18 sur le second plateau de pression 16 porte la référence 21 à la figure 1, cette zone 21 étant située radialement entre la zone d'appui 19 du diaphragme 18 sur le couvercle 8 et la zone d'appui de la seconde butée d'embrayage 20 sur le second diaphragme 18.

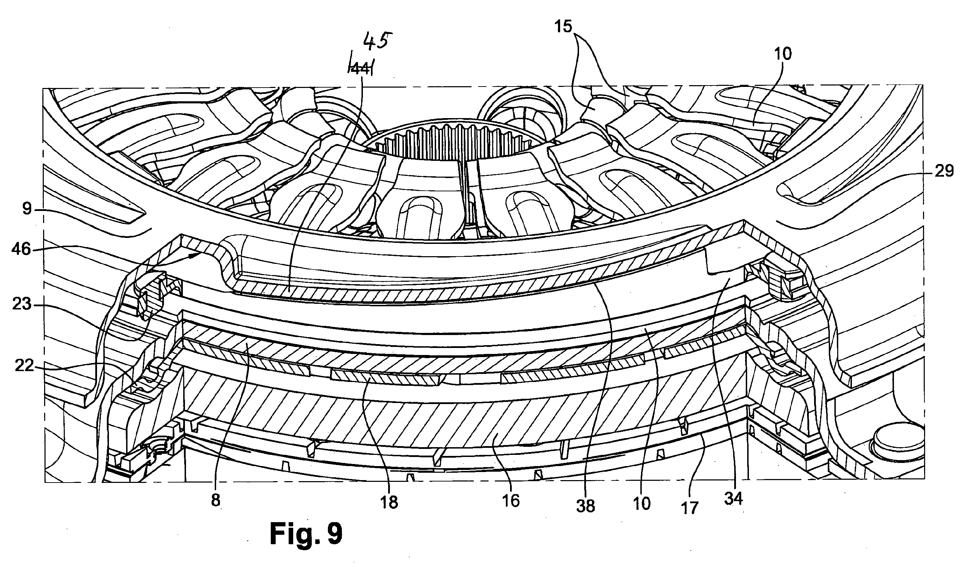

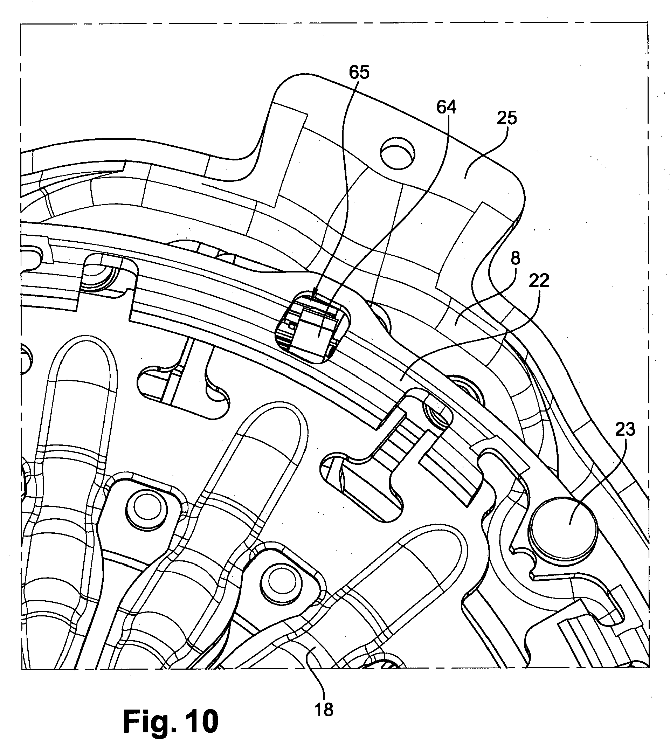

Une rondelle d'appui 22, fixée sur le couvercle 8 par l'intermédiaire de rivets 23 (figures 9 et 10), vient plaquer et maintenir en position la périphérie radialement externe du second diaphragme 18 contre la zone d'appui 19.

Le second embrayage 4 est également du type normalement ouvert. En position de repos du second diaphragme 18, c'est-à-dire lorsque la seconde butée de commande 20 n'exerce pas ou peu d'effort sur le second diaphragme 18, le second diaphragme 18 n'exerce pas (ou peu) d'effort sur le second plateau de pression 16. Le second plateau de pression 16 est écarté du plateau de réaction 6 par l'intermédiaire de moyens de rappels appropriés, de manière à libérer le second disque de friction 17.

Le second diaphragme 18, le second plateau de pression 16 et le second disque de friction 17 sont logés dans le couvercle 8. Le premier disque de friction 7 et le premier plateau de pression 5 sont logés dans un capot 24, fixe par rapport au couvercle 8 et au plateau de réaction 6.

Le couvercle 8 comporte, de l'arrière vers l'avant, des brides radiales 25 servant à la fixation sur le plateau de réaction 6, raccordées à une partie annulaire 26 (figure 1) entourant les éléments précités du second embrayage 4, elle-même prolongée par une partie annulaire 27 s'étendant radialement vers l'intérieur.

Comme cela est visible à la figure 1, le couvercle mobile 9 comporte une partie 28 radialement externe s'étendant vers l'avant depuis le premier plateau de pression 5 et entourant le couvercle 8, prolongée à l'avant par une partie 29 s'étendant radialement vers l'intérieur, elle-même prolongée par un rebord cylindrique 30 s'étendant vers l'arrière, en direction du second diaphragme 18.

Comme représenté aux figures 1 et 11, le bord libre 31 du rebord cylindrique 30 définit des faces sensiblement radiales aptes à servir à l'appui du premier diaphragme 10 afin de limiter son débattement lorsque le premier embrayage 3 est en position de stockage, c'est-à-dire avant montage du double embrayage sur la boîte de vitesses. De manière alternative, le diaphragme peut également venir en appui sur les têtes 14 des rivets 11.

Une fois le double embrayage monté sur véhicule, le premier diaphragme 10 est en appui contre la première butée d'embrayage 13 et le premier diaphragme 10 ne vient plus en appui sur le bord libre 31 ou sur les têtes 14 des rivets 11, en position débrayée.

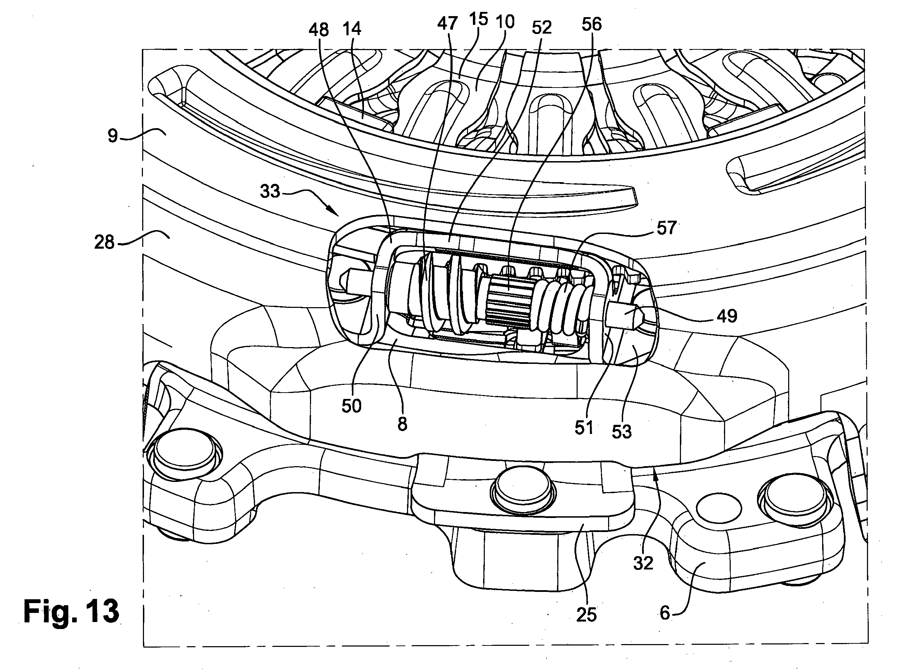

En outre, comme cela est visible à la figure 13, la partie radialement externe 28 comporte des surfaces radiales 32 tournées vers l'arrière et destinées à venir en appui contre des faces radiales 33 tournées vers l'avant du plateau de réaction 6. Ceci permet de limiter le déplacement du couvercle mobile 9 dans des phases de transport du double embrayage, avant montage sur une boîte de vitesses d'un véhicule.

Afin de compenser l'usure du premier disque de friction 7, du premier plateau de pression 5 et/ou du plateau de réaction 6, le premier embrayage 3 est équipé de moyens de rattrapage d'usure 33.

La structure et le fonctionnement de ces moyens de rattrapage d'usure 33 sont similaires à ceux des moyens décrits dans le document FR 2 847 626, au nom de la Demanderesse, leur positionnement étant toutefois différent.

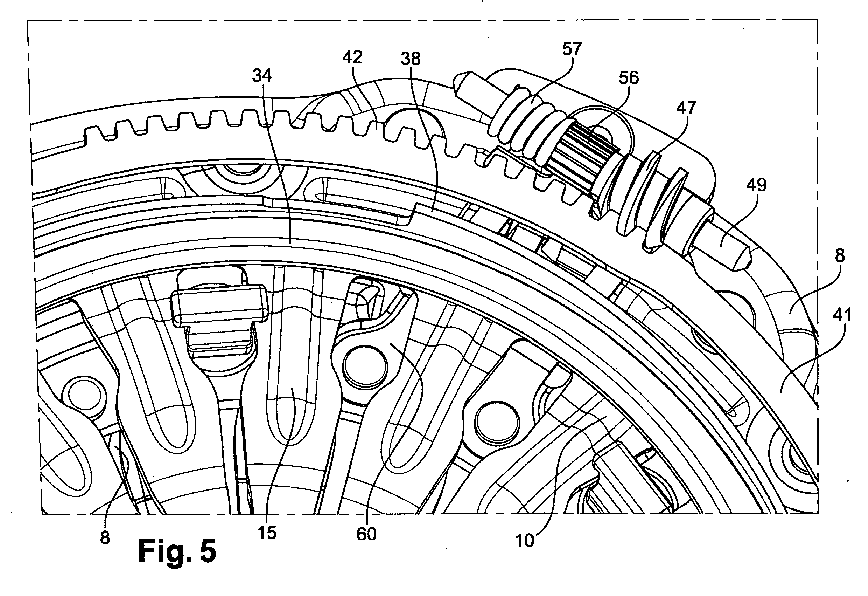

Les moyens de rattrapage d'usure 33 comportent un anneau 34 monté autour du rebord cylindrique 30 du couvercle mobile 9 et présentant, radialement de l'intérieur vers l'extérieur, une partie radiale 35, prolongée par une partie tronconique 36 évasée vers l'arrière, elle-même prolongée par un rebord 37 sensiblement cylindrique s'étendant vers l'avant et dont le bord libre forme des rampes 38 s'étendant circonférentiellement et inclinées de l'arrière vers l'avant. Ces rampes 38 sont notamment visibles aux figures 2, 3, 5, 7, 8 et 9.

L'anneau 34 est monté de façon mobile en translation et en rotation autour du rebord cylindrique 30.

Quatre pattes 39, 40 s'étendent radialement vers l'extérieur depuis le rebord 37 de l'anneau 34 (figure 2). Deux pattes 39 servent à la fixation d'un organe 41 en forme d'arc de cercle, dont le bord externe comporte une denture 42 s'étendant sur une partie seulement dudit bord externe. Deux autres pattes 40 servent à la fixation d'un organe d'équilibrage 43, également en forme d'arc de cercle, situé de façon diamétralement opposée par rapport à l'organe denté. Les extrémités circonférentielles de l'organe denté 41 et de l'organe d'équilibrage 43 sont fixées aux pattes correspondantes 39, 40 par l'intermédiaire de rivets 44.

Les rampes 38 prennent appui sur des contre-rampes 45 formées sur la surface arrière 46 de la partie radiale 29 du couvercle mobile 9 (figure 9).

La rotation de l'anneau 34 portant les rampes 38 par rapport au couvercle mobile 9 entraîne ainsi le déplacement de l'anneau 34 le long du rebord cylindrique 30 du couvercle mobile 9.

Le couvercle mobile 9 étant couplé en rotation avec le couvercle 8 et le plateau de réaction 6, on cherche à faire pivoter l'anneau 34 portant les rampes 38. Pour cela, la denture 42 de l'organe dentée 41 engrène avec une vis sans fin 47 montée dans une cassette 48 fixée sur le couvercle 8.

Plus particulièrement, la vis sans fin 47 est montée pivotante autour d'un arbre 49 et à l'intérieur d'une cassette fixée sur la paroi externe (ou paroi avant) de la partie radiale 27 du couvercle 8. On désigne par paroi externe, la paroi du couvercle 8 qui est opposée à l'espace interne logeant le second disque de friction 17, le second plateau de pression 16 et le second diaphragme 18.

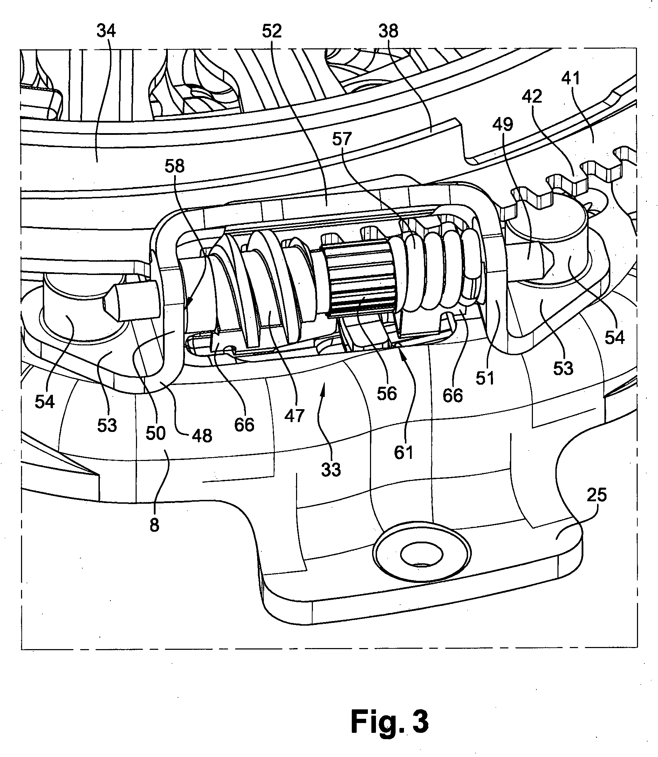

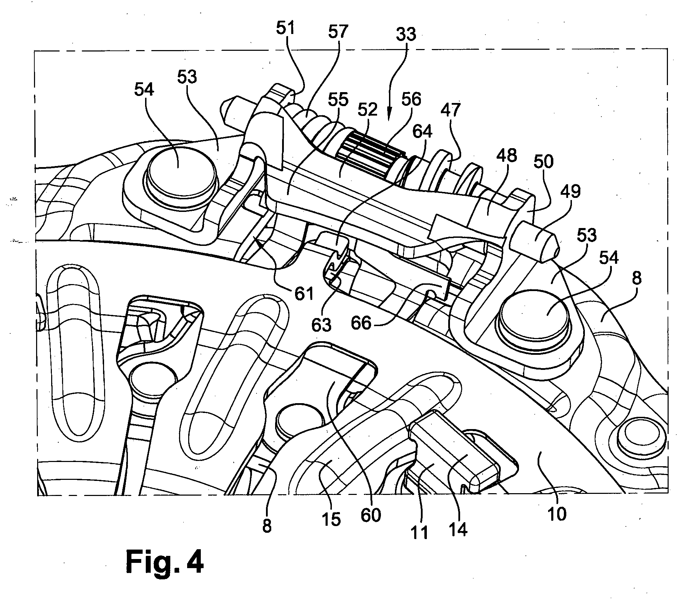

Comme cela est visible notamment aux figures 3, 4 et 13, la cassette 48 présente une forme générale en U, les deux branches ou ailes 50, 51 du U portant les extrémités de l'arbre 49, la base 52 du U s'étendant d'une aile 50 à l'autre 51 en entourant partiellement la vis sans fin 47.

Un évidement sur le dessus de la cassette 48 (figure 3) permet une meilleure tenue en centrifugation.

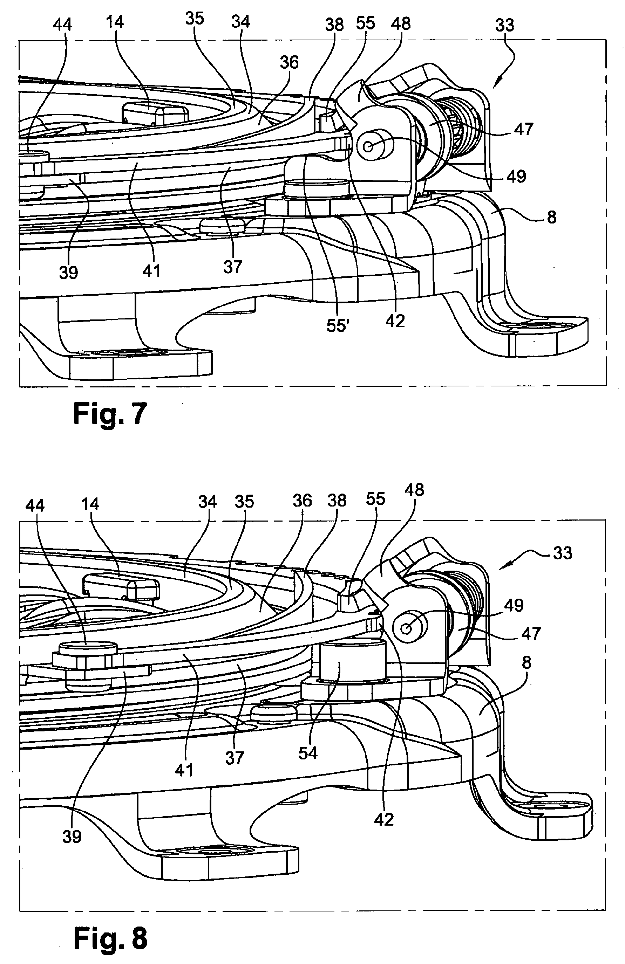

Les extrémités libres desdites ailes 50, 51 portent des brides latérales 53 de fixation sur le couvercle 8. Ces brides 50, 51 sont fixées au couvercle 8 par des rivets dont les têtes 54 s'étendent en regard de la paroi arrière de l'organe denté 41. Comme cela est mieux visible aux figures 7 et 8, la cassette 48 comporte en outre un rebord 55 s'étendant radialement vers l'intérieur, en regard de la face avant de l'organe denté 41. En fonctionnement, l'organe denté 41 est préchargé sur le rebord 55.

Dans la variante de la figure 7, les ailes 50, 51 de la cassette 48 comportent des surfaces 55 tournées en regard de la face arrière de l'organe denté 41.

Lesdites surfaces 55' et le rebord 55 de la cassette 48 forment des butées limitant le déplacement axial ou la flexion de l'organe denté 41 afin que la denture de ce dernier reste située au droit de l'axe de la vis sans fin 47.

Dans la variante de la figure 7, ce sont les têtes 54 des rivets précités et le rebord 55 de la cassette qui forment les butées limitant le déplacement axial ou la flexion de l'organe denté 41.

L'arbre 49 porte en outre une roue à rochet 56 couplée en rotation avec la vis sans fin 47, par exemple formée intégralement avec cette dernière. Un organe élastique 57 est monté entre l'aile 51 et la roue à rochet 56 de façon à plaquer la roue à rochet 56 et la vis sans fin 47 contre l'aile 50 opposée. Cette aile 50 a une surface interne 58 (figure 3), destinée à venir au contact de la vis sans fin 47, qui est écrouie afin d'en augmenter la dureté et limiter son usure par frottement. Cet écrouissage peut être effectué par emboutissage, moletage, galetage, par polissage mécanique ou par des opérations électrochimiques, telles que l'électropolissage ou le polissage électrolytique.

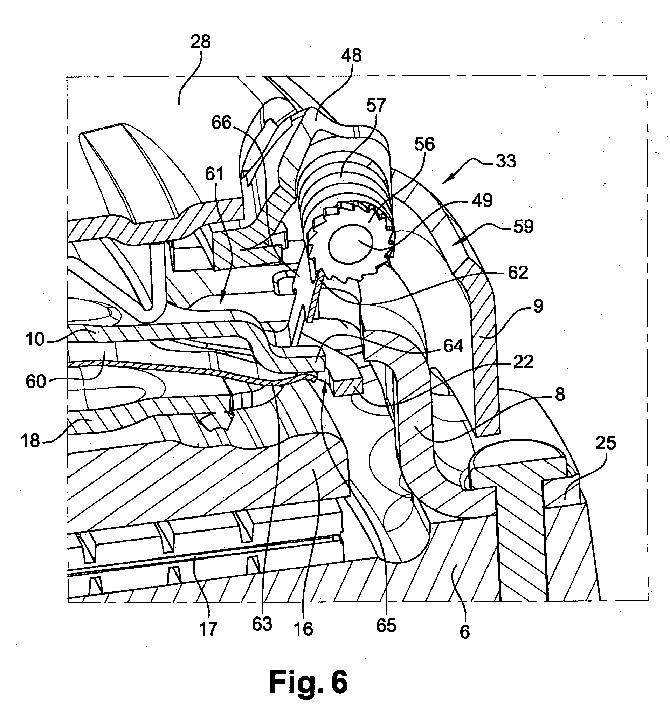

Comme cela est visible aux figures 1 et 6, une ouverture 59 est ménagée dans le couvercle mobile 9 afin de permettre le montage de la cassette 48 à l'extérieur du couvercle 8, la cassette 48 s'étendant partiellement au travers de cette ouverture 59.

La roue à rochet 56 coopère avec un cliquet 60 se présentant sous la forme d'une lamelle élastique métallique fixée sur la face avant de la partie radiale 27 du couvercle 8.

Le cliquet 60 présente une partie radialement interne s'étendant sensiblement radialement et fixée sur la face avant du couvercle 8, et une partie radialement externe formant un angle avec la partie radialement interne, s'étendant vers l'arrière au travers d'une ouverture 61 du couvercle 8.

La structure du cliquet 60 est similaire à celle du cliquet décrit dans le document FR 2 847 626.

En particulier, la partie radialement externe du cliquet 60 comporte une languette de commande 62 (figures 1, 6 et 13) coopérant avec les dents de la roue à rochet 56 de façon à autoriser la rotation de la roue à rochet 56 dans un sens de rotation, en cas d'usure, et à empêcher la rotation de la roue à rochet 56 dans le sens de rotation contraire. La partie radialement externe du cliquet 60 comporte également une languette de rappel 63 (figures 1 et 6).

Le premier diaphragme 10 comporte un doigt périphérique externe 64 d'actionnement du cliquet 60, destiné à venir en appui contre la languette de rappel 63 du cliquet 60 en phase de débrayage, et destiné à venir en appui contre la languette de commande 62 en phase d'embrayage.

Afin de ne pas entraver le déplacement du doigt d'actionnement 64 et de la languette de rappel 63, la rondelle d'appui 28 comporte une ouverture 65 (figure 1 et 10) autorisant le passage dudit doigt d'actionnement 64 et de ladite languette de rappel 63, lors de l'actionnement du premier diaphragme 10 en phase de débrayage.

La partie radialement externe du cliquet 60 comporte en outre deux pattes latérales 66 (figures 3, 4 et 6) formant des butées destinées à venir en appui contre les bords latéraux de l'ouverture 61 du couvercle 8 lors de l'actionnement du premier diaphragme 10 en phase de débrayage.

Le fonctionnement des moyens de rattrapage d'usure 33 va maintenant être décrit. Comme indiqué ci-dessus, ce fonctionnement est similaire à celui des moyens de rattrapage d'usure du document FR 2 847 626.

On supposera tout d'abord que les garnitures 67 du premier disque de friction 7, le premier plateau de pression 5 et le plateau de réaction 6 ne sont pas usés. Dans ce cas, en phase d'embrayage, le premier diaphragme 10 est déplacé par la première butée d'embrayage 13, de manière à ce que la périphérie externe du premier diaphragme 10 et son doigt d'actionnement 64 soient déplacés vers l'avant en poussant la languette de commande 62. L'extrémité libre de la languette de commande 62 se trouve alors poussée dans le fond d'une dent de la roue à rochet 56.

Lors du débrayage, la périphérie externe du premier diaphragme 10 est déplacée vers l'arrière, vers sa position de repos. Le doigt d'actionnement 64 du premier diaphragme 10 appuie alors sur la languette de rappel 63 du cliquet 60. Par conséquent, la languette de rappel 63 et la languette de commande 62 du cliquet 60 sont déplacées vers l'arrière, jusqu'à ce que les pattes latérales 66 du cliquet 60 viennent en butée contre les bords latéraux de l'ouverture 61 du couvercle 8. Si aucune usure n'est intervenue, le retrait de la languette de commande 62 vis-à-vis de la dent correspondante de la roue à rochet 56 n'est pas suffisant pour sauter la dent. La roue à rochet 56 ne peut donc pas être entraînée en rotation lors de la phase d'embrayage suivante et les moyens de rattrapage d'usure 33 ne modifient pas la position du premier plateau de pression 5 par rapport au plateau de réaction 6.

Si, au contraire, le premier disque de friction 7, le premier plateau de pression 5 et/ou le plateau de réaction 6 sont usés, en phase d'embrayage, la périphérie externe du premier diaphragme 10 et la languette de commande 62 peuvent être déplacées vers l'avant de façon suffisamment importante pour faire tourner légèrement la roue à rochet 56 autour de l'arbre 49. Lors de cette phase d'embrayage, l'anneau 34 est immobilisé en rotation, par coincement entre le premier diaphragme 10 et le couvercle mobile 9. Ainsi, l'organe denté 41 est également immobilisé en position. La rotation de la roue à rochet 56 et de la vis sans fin 47 engrenant avec la denture 42 de l'organe denté 41 entraîne alors le coulissement de l'ensemble roue à rochet 56 - vis sans fin 47 le long de l'arbre 49 et en direction de l'aile 51, en comprimant l'organe élastique 57. Bien entendu, la largeur des dents de la roue à rochet 56 et la largeur de la languette de commande 62 sont telles que leur coopération est maintenue lors de ce coulissement.

Lors de la phase de débrayage suivante, l'anneau 34 portant l'organe denté 41 est libéré, la languette de commande 62 empêche la roue à rochet 56 et la vis sans fin 47 de tourner et l'ensemble roue à rochet 56 - vis sans fin 47 coulisse le long de l'arbre 49 et en direction de l'aile 50, sous l'action de l'organe élastique de rappel 57. Ceci entraîne la rotation de l'anneau 34 par rapport au couvercle mobile 9. Les rampes 38 sont donc déplacées par rapport aux contre-rampes 45 de façon à écarter l'anneau 34 et le couvercle mobile 9. La distance entre la zone d'appui 68 du premier diaphragme 10 sur l'anneau 34 et la partie radiale 29 du couvercle mobile 9 est augmentée, ce qui a finalement pour effet de réduire la distance entre le premier plateau de pression 5 et le plateau de réaction 6 afin de compenser l'usure.

Plusieurs phases d'embrayage et de débrayage peuvent être nécessaires afin de rattraper la totalité du jeu généré par l'usure.

L'invention propose ainsi un double embrayage, dont l'un des mécanismes d'embrayage 3, 4 est équipé de moyens de rattrapage d'usure 33, présentant un encombrement axial et radial réduit. Bien que la structure et le fonctionnement de ces moyens de rattrapage d'usure 33 soient similaires à ceux du document FR 2 847 626, leur agencement à l'avant du double embrayage permet d'augmenter la compacité du double embrayage tout en permettant le rattrapage d'usure du mécanisme d'embrayage 3 situé à l'arrière du double embrayage.

## Revendications

1. Double embrayage à rattrapage d'usure, notamment pour véhicule automobile, comportant au moins un plateau de réaction (6) destiné à être couplé en rotation à un arbre menant, un premier et un second disques de friction (7, 17) portant des garnitures de friction (67), destinés à être couplés respectivement à un premier et un second arbre mené (1, 2), un premier et un second plateau de pression (5, 16), actionnés respectivement par un premier et un second diaphragme (10, 18) de façon à serrer ou libérer le premier et le second disques de friction (7, 17) sur le plateau de réaction (6), le premier plateau de pression (5) étant relié fixement à un couvercle mobile en translation (9) par rapport au plateau de réaction (6), et étant actionné par appui du premier diaphragme (10) sur le couvercle mobile (9), et des moyens (33) de rattrapage de l'usure du premier disque de friction (7), du premier plateau de pression (5) et/ou du plateau de réaction (6) associé, **caractérisé en ce que** les moyens de rattrapage d'usure (33) comportent des moyens à rampes (34, 38), disposés du côté du premier diaphragme, coopérant avec des moyens à contre-rampes (9, 45), disposés du côté du couvercle mobile (9), les moyens à rampes (34, 38) et les moyens à contre-rampes (9, 45) étant disposés entre le premier diaphragme (10) et le couvercle mobile (9) de façon à ce que la rotation des moyens à rampes (34, 38) par rapport aux moyens à contre-rampes (9, 45) modifie la distance entre le premier diaphragme (10) et le couvercle mobile (9), les moyens à rampes (34, 38) portant une denture (41, 42) engrenant avec une vis sans fin (47), les moyens de rattrapage d'usure (33) comportant en outre des moyens d'entrainement en rotation de la vis sans fin (47), aptes à être rendus opérationnels par l'usure lorsque le premier diaphragme (10) est actionné, la vis sans fin (47) étant portée par une partie (8) solidaire du plateau de réaction (6) coopérant avec le premier plateau de pression (5) pour le serrage du premier disque de friction (7).

2. Double embrayage selon la revendication 1, **caractérisé en ce qu'**il comporte un plateau de réaction (6) unique, disposé axialement entre les premier et second disques de friction (7, 17).

3. Double embrayage selon la revendication 1 ou 2, **caractérisé en ce que** les moyens d'entraînement de la vis sans fin comportent une roue à rochet (56) solidaire en rotation de la vis sans fin (47), coopérant avec un cliquet (60) apte à être déplacé lors de l'actionnement du premier diaphragme (10).

4. Double embrayage selon l'une des revendications 1 à 3, **caractérisé en ce que** le second plateau de pression (16), le second disque de friction (17) et le second diaphragme (18) sont logés dans un couvercle (8) fixé au plateau de réaction correspondant (6), la vis sans fin (47) étant montée mobile en rotation dans une cassette (48) fixée sur le couvercle (8), à l'extérieur de celui-ci.

5. Double embrayage selon les revendications 3 et 4, **caractérisé en ce que** la vis sans fin (47) et/ou la roue à rochet (56) sont montées mobiles en rotation à l'intérieur de la cassette (48), la vis sans fin (47) et/ou la roue à rochet (56) étant plaquées par un organe élastique (57) contre une face écrouie (58) de la cassette (48).

6. Double embrayage selon les revendications 3 et 4, **caractérisé en ce que** le premier diaphragme (10) comporte un doigt périphérique externe (64) d'actionnement du cliquet (60), le couvercle (8) portant une rondelle (22) d'appui du second diaphragme (18) comportant une ouverture (65) autorisant le passage dudit doigt d'actionnement (64), lors de l'actionnement du premier diaphragme (10).

7. Double embrayage selon l'une des revendications 4 à 6, **caractérisé en ce qu'**un organe denté (41) engrenant avec la vis sans fin (47) est fixé sur les moyens à rampe (34), la flexion ou le déplacement axial de l'organe denté (41) étant limité par deux butées opposées (54, 55).

8. Double embrayage selon la revendication 7, **caractérisé en ce que** la flexion ou le déplacement axial de l'organe denté (41) est limité par un rebord de la cassette (55), d'une part, et par des surfaces opposées (55') formées dans deux ailes (50, 51) de la cassette (55), d'autre part, lesdites ailes (50, 51) servant au support de la vis sans fin (47).

9. Double embrayage selon la revendication 7, **caractérisé en ce que** la flexion ou le déplacement axial de l'organe denté (41) est limité par un rebord de la cassette (55), d'une part, et par les moyens de fixation (54) de la cassette (48) sur le couvercle (8), d'autre part.

10. Double embrayage selon l'une des revendications 1 à 9, **caractérisé en ce que** le premier diaphragme (10) est monté basculant sur le couvercle (8), par l'intermédiaire de rivets (11), le basculement du premier diaphragme (10) étant limité par les têtes (14) desdits rivets (11) avant montage sur véhicule. et, dans l'autre sens, par une face (31) sensiblement radiale du couvercle mobile (9).

11. Double embrayage selon la revendication 10, **caractérisé en ce que** les têtes (14) des rivets (11) servant de butée pour le premier diaphragme (10) présentent une forme générale en T dont les branches latérales sont destinées à venir en appui contre des doigts (15) radialement internes du premier diaphragme (10).

12. Double embrayage selon l'une des revendications 1 à 11, **caractérisé en ce que** les moyens à rampes comportent un anneau (34) monté de façon mobile en rotation et en translation autour d'une partie cylindrique (30) du couvercle mobile (9), l'anneau (34) comportant des rampes (38) s'étendant circonférentiellement, coopérant avec des contre-rampes complémentaires (44) formées sur le couvercle mobile (9).

13. Double embrayage selon l'une des revendications 3 à 12, **caractérisé en ce que** le cliquet (60) est formé d'une lamelle élastique présentant une languette de commande (62) coopérant avec les dents de la roue à rochet (56) de façon à autoriser la rotation de la roue à rochet (56) dans un sens de rotation en cas d'usure, et à empêcher la rotation de la roue à rochet (56) dans le sens de rotation contraire, le premier diaphragme (10) venant en appui contre une languette de rappel (63) du cliquet (60), de manière à déplacer la languette de commande (62) lors de l'actionnement du premier diaphragme (10).

14. Double embrayage selon les revendications 4 et 13, **caractérisé en ce que** le cliquet (60) comporte au moins une patte latérale (66) formant une butée destinée à venir en appui contre le couvercle (8), lors de l'actionnement du premier diaphragme (10).

## Patentansprüche

1. Doppelkupplung mit Verschleißnachstellung, insbesondere für ein Kraftfahrzeug, aufweisend mindestens eine Gegendruckplatte (6), welche dafür vorgesehen ist, mit einer getriebenen Welle drehfest gekoppelt zu werden, eine erste und zweite, Reibbeläge (67) tragende Reibscheibe (7, 17), welche dafür vorgesehen sind, jeweils mit einer ersten und einer zweiten getriebenen Welle (1, 2) gekoppelt zu werden, eine erste und zweite Druckplatte (5, 16), welche jeweils von einer ersten und einer zweiten Membran (10, 18) derartig betätigt werden, um die erste und die zweite Reibscheibe (7, 17) auf die Gegendruckplatte (6) zu pressen oder von ihr freizugeben, wobei die erste Druckplatte (5) fest mit einem in Bezug auf die Gegendruckplatte (6) verschiebbar beweglichen Deckel (9) verbunden ist und durch Auflage der ersten Membran (10) auf dem beweglichen Deckel (9) betätigt wird, und Mittel (33) zur Verschleißnachstellung der ersten Reibscheibe (7), der ersten Druckplatte (5) und/oder der zugeordneten Gegendruckplatte (6), **dadurch gekennzeichnet, dass** die Mittel zur Verschleißnachstellung (33) Rampenmittel (34, 38) aufweisen, welche auf der Seite der ersten Membran angeordnet sind, die mit Gegenrampenmitteln (9, 45) zusammenwirken, welche auf der Seite des beweglichen Deckels (9) angeordnet sind, wobei die Rampenmittel (34, 38) und die Gegenrampenmittel (9, 45) zwischen der ersten Membran (10) und dem beweglichen Deckel (9) derartig angeordnet sind, dass die Drehung der Rampenmittel (34, 38) in Bezug auf die Gegenrampenmittel (9, 45) den Abstand zwischen der ersten Membran (10) und dem beweglichen Deckel (9) verändert, wobei die Rampenmittel (34, 38) eine Verzahnung (41, 42) trägt, welche mit einer Schnecke (47) kämmt, wobei die Mittel zur Verschleißnachstellung (33) außerdem Mittel zum Versetzen der Schnecke (47) in Drehung aufweisen, welche geeignet sind, durch Verschleiß zum Einsatz zu kommen, wenn die erste Membran (10) betätigt wird, wobei die Schnecke (47) von einem Abschnitt (8) getragen wird, welcher fest mit der Gegendruckplatte (6) verbunden ist, welche mit der ersten Druckplatte (5) zur Einspannung der ersten Reibscheibe (7) zusammenwirkt.

2. Doppelkupplung nach Anspruch 1, **dadurch gekennzeichnet, dass** sie eine einzige Gegendruckplatte (6) aufweist, welche axial zwischen der ersten und zweiten Reibscheibe (7, 17) angeordnet ist.

3. Doppelkupplung nach Anspruch 1 oder 2, **dadurch gekennzeichnet, dass** die Mittel zum Antrieb der Schnecke ein drehfest mit der Schnecke (47) verbundenes Klinkenrad (56) aufweisen, welches mit einer Sperrklinke (60) zusammenwirkt, welche geeignet ist, bei der Betätigung der ersten Membran (10) bewegt zu werden.

4. Doppelkupplung nach einem der Ansprüche 1 bis 3, **dadurch gekennzeichnet, dass** die zweite Druckplatte (16), die zweite Reibscheibe (17) und die zweite Membran (18) in einem an der entsprechenden Gegendruckplatte (6) befestigten Deckel (8) angeordnet sind, wobei die Schnecke (47) drehbeweglich in einer an der Außenseite des Deckels (8) befestigten Kassette (48) montiert ist.

5. Doppelkupplung nach den Ansprüchen 3 und 4, **dadurch gekennzeichnet, dass** die Schnecke (47) und/oder das Klinkenrad (56) drehbeweglich im Inneren der Kassette (48) montiert sind, wobei die Schnecke (47) und/oder das Klinkenrad (56) durch ein elastisches Organ (57) gegen eine gehärtete Fläche (58) der Kassette (48) gepresst werden.

6. Doppelkupplung nach den Ansprüchen 3 und 4, **dadurch gekennzeichnet, dass** die erste Membran (10) einen äußeren Randfinger (64) zur Betätigung der Sperrklinke (60) aufweist, wobei der Deckel (8) eine Druckscheibe (22) der zweiten Membran (18) trägt, welche eine Öffnung (65) aufweist, welche den Durchtritt des Betätigungsfingers (64) bei der Betätigung der erste Membran (10) ermöglicht.

7. Doppelkupplung nach einem der Ansprüche 4 bis 6, **dadurch gekennzeichnet, dass** ein gezahntes Organ (41), welches mit der Schnecke (47) kämmt, an den Rampenmitteln (34) befestigt ist, wobei die Biegung oder axiale Verlagerung des gezahnten Organs (41) durch zwei gegenüber liegende Anschläge (54, 55) begrenzt wird.

8. Doppelkupplung nach Anspruch 7, **dadurch gekennzeichnet, dass** die Biegung oder axiale Verlagerung des gezahnten Organs (41) einerseits durch einen Rand der Kassette (55) und andererseits durch gegenüber liegende Flächen (55'), welche durch zwei Flanken (50, 51) der Kassette (55) gebildet werden, begrenzt wird, wobei die Flanken (50, 51) als Träger der Schnecke (47) dienen.

9. Doppelkupplung nach Anspruch 7, **dadurch gekennzeichnet, dass** die Biegung oder axiale Verlagerung des gezahnten Organs (41) einerseits durch einen Rand der Kassette (55) und andererseits durch die Mittel zur Befestigung (54) der Kassette (48) an dem Deckel (8) begrenzt wird.

10. Doppelkupplung nach einem der Ansprüche 1 bis 9, **dadurch gekennzeichnet, dass** die erste Membran (10) mit Hilfe von Nieten (11) an dem Deckel (8) schwenkbar montiert ist, wobei das Schwenken der ersten Membran (10) durch die Köpfe (14) der Nieten (11) vor der Montage im Fahrzeug und in der anderen Richtung durch eine im Wesentlichen radiale Fläche (31) des beweglichen Deckels (9) begrenzt ist.

11. Doppelkupplung nach Anspruch 10, **dadurch gekennzeichnet, dass** die Köpfe (14) der Nieten (11), welche als Anschlag der ersten Membran (10) dienen, eine allgemeine Form eines T aufweisen, dessen seitlichen Arme dafür vorgesehen sind, sich an den radial inneren Fingern (15) der ersten Membran (10) abzustützen.

12. Doppelkupplung nach einem der Ansprüche 1 bis 11, **dadurch gekennzeichnet, dass** die Rampenmittel einen Ring (34) aufweisen, welcher um einen zylindrischen Teil (30) des beweglichen Deckels (9) herum auf bewegliche Weise in Drehrichtung und Verschieberichtung montiert ist, wobei der Ring (34) Rampen (38) aufweist, welche sich in Umfangsrichtung erstrecken, welche mit komplementären Gegenrampen (45) zusammenwirken, die an dem beweglichen Deckel (9) gebildet sind.

13. Doppelkupplung nach einem der Ansprüche 3 bis 12, **dadurch gekennzeichnet, dass** die Sperrklinke (60) von einer elastischen Zunge gebildet wird, welche eine Steuerzunge (62) darstellt, welche mit den Zähnen des Klinkenrades (56) derartig zusammenwirkt, um die Drehung des Klinkenrades (56) in einer Drehrichtung im Falle von Verschleiß zu ermöglichen und um die Drehung des Klinkenrades (56) in der entgegengesetzten Drehrichtung zu verhindern, wobei die erste Membran (10) sich an einer Rückstellzunge (63) der Sperrklinke (60) derartig abstützt, um die Steuerzunge (62) bei der Betätigung der ersten Membran (10) zu bewegen.

14. Doppelkupplung nach einem der Ansprüche 4 bis 13, **dadurch gekennzeichnet, dass** die Sperrklinke (60) mindestens einen seitlichen Lappen (66) aufweist, welcher einen Anschlag bildet, der dafür vorgesehen ist, sich bei der Betätigung der ersten Membran (10) an dem Deckel (8) abzustützen.

## Claims

1. Dual clutch with wear compensation, in particular for a motor vehicle, comprising at least one reaction plate (6) intended to be coupled in rotation to a driving shaft, a first and a second friction disc (7, 17) bearing friction linings (67) and intended to be coupled respectively to a first and a second driven shaft (1, 2), a first and a second pressure plate (5, 16), actuated respectively by a first and a second diaphragm (10, 18) so as to clamp or release the first and the second friction disc (7, 17) onto or from the reaction plate (6), the first pressure plate (5) being fixedly connected to a cover (9) which is translationally movable with respect to the reaction plate (6), and being actuated by the first diaphragm (10) bearing on the movable cover (9), and means (33) for compensating the wear of the first friction disc (7), the first pressure plate (5) and/or the associated reaction plate (6), **characterized in that** the wear compensation means (33) comprise ramp means (34, 38) arranged on the first diaphragm side and cooperating with counter-ramp means (9, 45) arranged on the movable cover (9) side, the ramp means (34, 38) and the counter-ramp means (9, 45) being arranged between the first diaphragm (10) and the movable cover (9) in such a way that the rotation of the ramp means (34, 38) with respect to the counter-ramp means (9, 45) modifies the distance between the first diaphragm (10) and the movable cover (9), the ramp means (34, 38) bearing a toothing (41, 42) meshing with a worm (47), the wear compensation means (33) additionally comprising means for rotationally driving the worm (47) that are able to be rendered operational as a result of wear when the first diaphragm (10) is actuated, the worm (47) being borne by a part (8) secured to the reaction plate (6) that cooperates with the first pressure plate (5) for clamping the first friction disc (7).

2. Dual clutch according to Claim 1, **characterized in that** it comprises a single reaction plate (6) arranged axially between the first and second friction discs (7, 17).

3. Dual clutch according to Claim 1 or 2, **characterized in that** the means for driving the worm comprise a ratchet wheel (56) which rotates as one with the worm (47) and cooperates with a pawl (60) able to be moved during the actuation of the first diaphragm (10).

4. Dual clutch according to one of Claims 1 to 3, **characterized in that** the second pressure plate (16), the second friction disc (17) and the second diaphragm (18) are housed in a cover (8) fixed to the corresponding reaction plate (6), the worm (47) being mounted rotatably in a cartridge (48) fixed to the cover (8), outside the latter.

5. Dual clutch according to Claims 3 and 4, **characterized in that** the worm (47) and/or the ratchet wheel (56) are rotatably mounted inside the cartridge (48), the worm (47) and/or the ratchet wheel (56) being pressed by an elastic member (57) against a workhardened face (58) of the cartridge (48).

6. Dual clutch according to Claims 3 and 4, **characterized in that** the first diaphragm (10) comprises an outer peripheral finger (64) for actuating the pawl (60), the cover (8) bearing a washer (22) for bearing the second diaphragm (18) that comprises an opening (65) allowing the passage of the said actuating finger (64) during the actuation of the first diaphragm (10).

7. Dual clutch according to one of Claims 4 to 6, **characterized in that** a toothed member (41) meshing with the worm (47) is fixed to the ramp means (34), the bending or the axial movement of the toothed member (41) being limited by two opposed stops (54, 55).

8. Dual clutch according to Claim 7, **characterized in that** the bending or the axial movement of the toothed member (41) is limited by a rim (55) of the cartridge, on the one hand, and by opposed surfaces (55') formed in two wings (50, 51) of the cartridge (55), on the other hand, the said wings (50, 51) serving as a support for the worm (47).

9. Dual clutch according to Claim 7, **characterized in that** the bending or the axial movement of the toothed member (41) is limited by a rim (55) of the cartridge, on the one hand, and by the means (54) for fixing the cartridge (48) to the cover (8), on the other hand.

10. Dual clutch according to one of Claims 1 to 9, **characterized in that** the first diaphragm (10) is tiltably mounted on the cover (8) by way of rivets (11), the tilting of the first diaphragm (10) being limited by the heads (14) of the said rivets (11) before mounting on the vehicle and, in the other direction, by a substantially radial face (31) of the movable cover (9).

11. Dual clutch according to Claim 10, **characterized in that** the heads (14) of the rivets (11) serving as a stop for the first diaphragm (10) have the general shape of a T whose lateral branches are intended to bear against radially inner fingers (15) of the first diaphragm (10).

12. Dual clutch according to one of Claims 1 to 11, **characterized in that** the ramp means comprise a ring (34) mounted rotatably and translatively about a cylindrical part (30) of the movable cover (9), the ring (34) comprising ramps (38) extending circumferentially and cooperating with complementary counter-ramps (45) formed on the movable cover (9).

13. Dual clutch according to one of Claims 3 to 12, **characterized in that** the pawl (60) is formed from an elastic lamella having a control tongue (62) cooperating with the teeth of the ratchet wheel (56) so as to allow the rotation of the ratchet wheel (56) in one direction of rotation in the event of wear, and to prevent the rotation of the ratchet wheel (56) in the opposite direction of rotation, the first diaphragm (10) bearing against a return tongue (63) of the pawl (60) so as to move the control tongue (62) during the actuation of the first diaphragm (10).

14. Dual clutch according to Claims 4 and 13, **characterized in that** the pawl (60) comprises at least one lateral tab (66) forming a stop intended to bear against the cover (8) during the actuation of the first diaphragm (10).
